# EUROPEAN PATENT SPECIFICATION

(11) **EP 1 925 538 B1**
(45) Date of publication and mention of the grant of the patent: **08.09.2010**
(21) Application number: 06255925.7
(22) Date of filing: 21.11.2006
(51) Int. Cl.: B62D 43/02, B62D 43/10, B62D 43/00, B62D 25/20

(54) **Spare tire-fastening device**
Ersatzreifenbefestigungsvorrichtung
Dispositif de fixation de pneu de rechange

(43) Date of publication of application: 28.05.2008
(73) Proprietor: AOYAMA SEISAKUSHO CO., LTD., Nagoya-shi, Aichi 466-0825 (JP)
(72) Inventor: Katou, Katsuhisa, Niwa-gun Aichi 480-0198 (JP); Kajita, Hirohisa, Niwa-gun Aichi 480-0198 (JP); Kato, Masaaki, Niwa-gun Aichi 480-0198 (JP)
(74) Representative: Paget, Hugh Charles Edward

(56) References cited:
- WO-A-96/01955
- US-A1- 2005 097 992

## Description

### BACKGROUND OF THE INVENTION

### 1. Field of the Invention

The present invention relates to a spare tire-fastening device for use in fastening a spare tire to a vehicle body by means of a screw.

### 2. Description of the Related Art

A vehicle spare tire is accommodated in a concave portion formed in a trunk or the like of a vehicle and, if left in that state, is jolted by vibration that occurs while the vehicle is moving. Thus, to fasten the spare tire securely, a screw fastening-type spare tire-fastening device has conventionally been used. In an example disclosed in Japanese Utility Model Application Publication No.1994-83577, a head portion that is made of resin, and that at the same time acts as a grip, is formed integrally at the head of a metal bolt. This head portion that is made of resin has a large diameter, and it thus capable of pressing the hub of a spare tire and by gripping by hand the head portion made of resin so as to turn it, the metal bolt can be screwed into a bolt hole in the vehicle body and fastened so as not to jolt the spare tire. However, the integrally formed product comprising the metal bolt and head portion made of resin has entailed a disadvantage, insofar when a used vehicle is dismantled for purposes of recycling, it is difficult to separate the metal portion from the resin portion.

As described in Japanese Patent Application Publication No.2005-140300 (corresponding with US-A-2005/0097992), a spare tire-fastening device has been developed that has a structure in which a metal bolt can be fitted onto the center of a resin head portion for pressing the hub of the spare tire so as to prevent it from rotating in relation thereto. The content of this document has been taken as basis for the preamble of independent claim 1. FIGS. 1, 2 show sectional views of such a device. A spare tire-fastening device having such a structure is superior in terms of efficiency of recycling because, when a used vehicle is dismantled, the resin head portion and the metal bolt can be easily separated from each other.

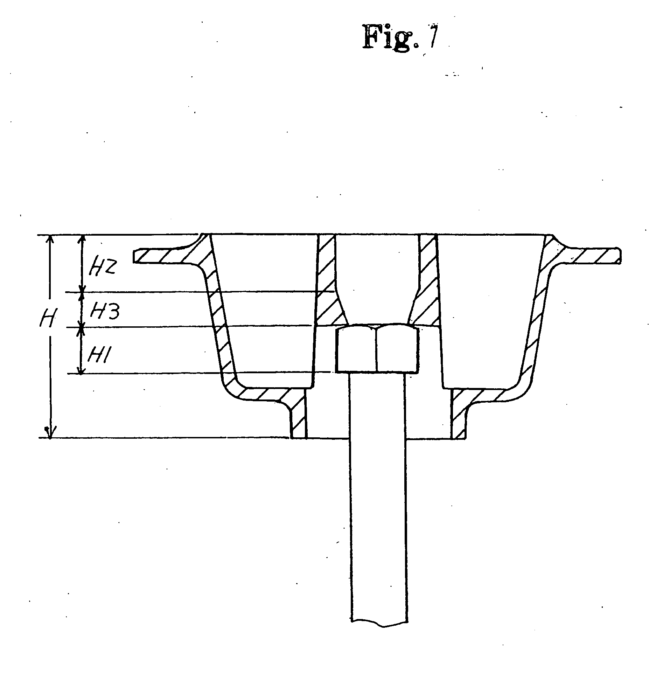

However, in order to prevent a bolt inserted into the central hole in the resin-made head portion from slipping out in an upward direction, the bolt-insertion type spare tire-fastening device needs to be provided with a fall-preventing pawl which engages the bolt head portion within the resin-made head portion. In the spare tire-fastening device described in the above publication, the peripheral wall of the central hole is cut from its bottom portion so as to form a fall-preventing pawl directed in a downward direction. Accordingly, as shown in the sectional view of FIG. 1, a height H of the resin-made head portion needs to be greater than H1+H2+H3 which is a sum of H1, the height of the bolt head, H2, the length of the fall-preventing pawl, and H3, the length of the pawl root (the portion from a proximal portion of the pawl to its hook portion). A problem has thus arisen that the resin-made head portion has tended to increase in size.

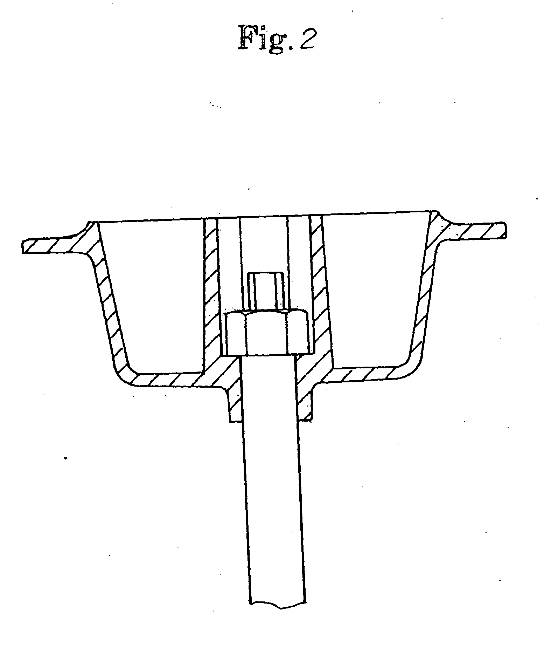

As shown in FIGS. 1, 2, the peripheral walls on both sides and the bottom portion of the fall-preventing pawl are cut away in order to secure elasticity of the fall-preventing pawl. Consequently, the peripheral walls in the vicinity of the fall-preventing pawl lack strength, and there has been a risk of this portion being distorted or broken if it is tightened too strongly.

### SUMMARY OF THE INVENTION

The object of the present invention is accordingly to provide a spare tire-fastening device in which there is no danger of the metal bolt falling during use, in which, at a time of recycling, the metal bolt and the resin-made head portion can be easily separated at a time of recycling and further in which the height of the resin-made head portion can be reduced so as to be less than that of a conventional product.

To achieve the object described above, the present invention provides a spare tire-fastening device as set out in claim 1.

Preferably, the grip portion has on its outer periphery projections and dents used for rotating by hand the resin-made head portion, and the cylindrical portion formed within the central hole is formed into a rectangular column for rotating the resin-made head portion with a tool inserted into the central hole. Further, preferably, the bolt fall-preventing pawl is formed by cutting away part of the inner peripheral portion from a top end thereof, leaving behind the outer peripheral portion of the cylindrical portion.

Because the spare tire-fastening device of the present invention comprises a resin-made head portion for pressing the hub of a spare tire and a metal bolt, which is inserted into a bolt-insertion hole in this resin-made head portion and is bolted to a vehicle body, and because the bolt-insertion hole has a non-circular portion corresponding to the bolt head portion, when the resin-made head portion is rotated by means of its grip portion being gripped by hand, a rotation torque is securely transmitted to the metal bolt, and the metal bolt can accordingly be tightened securely to the vehicle body, and removed therefrom. Additionally, the resin-made head portion may be rotated by means of a tool such as a socket wrench engaged with the rectangular column-like cylindrical portion. Thus, the spare tire can be fastened, or removed, easily.

In conditions of normal use, the bolt never slips out in an upward direction, because the head portion thereof engages with the fall-preventing pawls. However, when a spare tire is removed from a vehicle body at the time of recycling, and the fall-preventing pawls are opened outwardly by means of a front end of an implement such as a screw driver, the metal bolt can be easily separated from the resin-made head portion and a superior quality of recycling secured.

Further, because in the bolt fall-preventing pawls formed on the inner face of the non-circular portion of the bolt-insertion hole, the top ends are bent inwardly, and the pawl root can be formed on the outer peripheral portion of the bolt head, as will be described later, in comparison with a conventional product, the height of the resin-made head portion can be made lower. Additionally, if the bolt fall-preventing pawls are formed by cutting away part of the inner peripheral portion from its top end, leaving behind the outer peripheral portion of the cylindrical portion, the strength of the cylindrical portion in the vicinity of the fall-preventing pawl never becomes inadequate, and the peripheral wall portion in the vicinity of the fall-preventing pawl is never distorted or broken.

### BRIEF DESCRIPTION OF THE DRAWINGS

FIG. 1 is a sectional view showing a conventional spare tire-fastening device;
FIG. 2 is a sectional view showing another conventional spare tire-fastening device;
FIG. 3 is a front view showing an embodiment of the present invention;
FIG. 4 is a sectional view of major portions;
FIG. 5 is another sectional view of major portions;
FIG. 6 is a perspective view of a resin-made head portion;
FIG. 7 is a plan view of a resin-made head portion; and
FIG. 8 is an explanatory diagram for purposes of comparing a conventional product with the product of the present invention.

### DESCRIPTION OF THE PREFERRED EMBODIMENTS

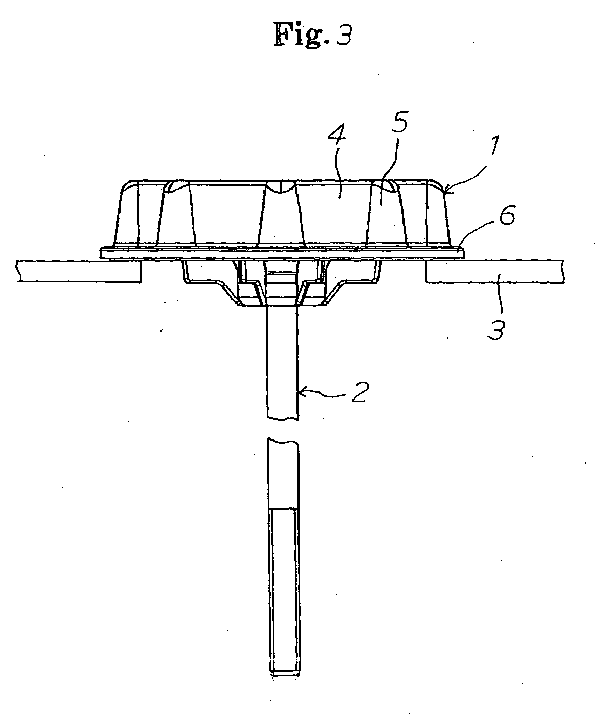

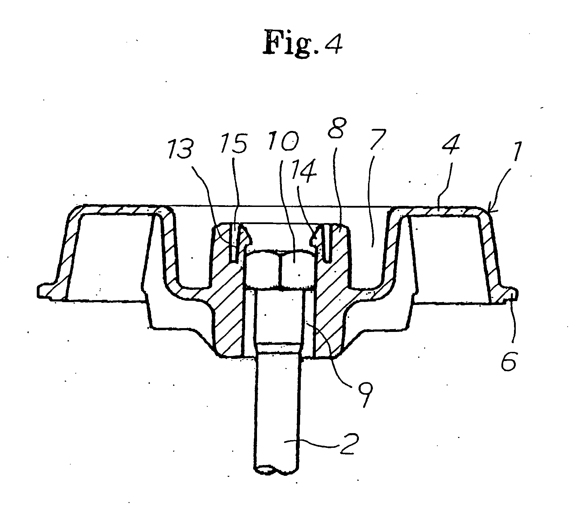

Hereinafter, the embodiment of the present invention will be described with reference to FIGS. 3-8. As shown in FIGS. 3, 4, the spare tire-fastening device of the present invention is comprised of a large diameter resin-made head portion 1 and a metal bolt 2 having a long shaft portion which is inserted into the resin-made head portion 1. The resin-made head portion 1 is an integrally formed product composed of, for example, polyethylene resin having a diameter large enough for purposes of pressing the hub 3 of the spare tire.

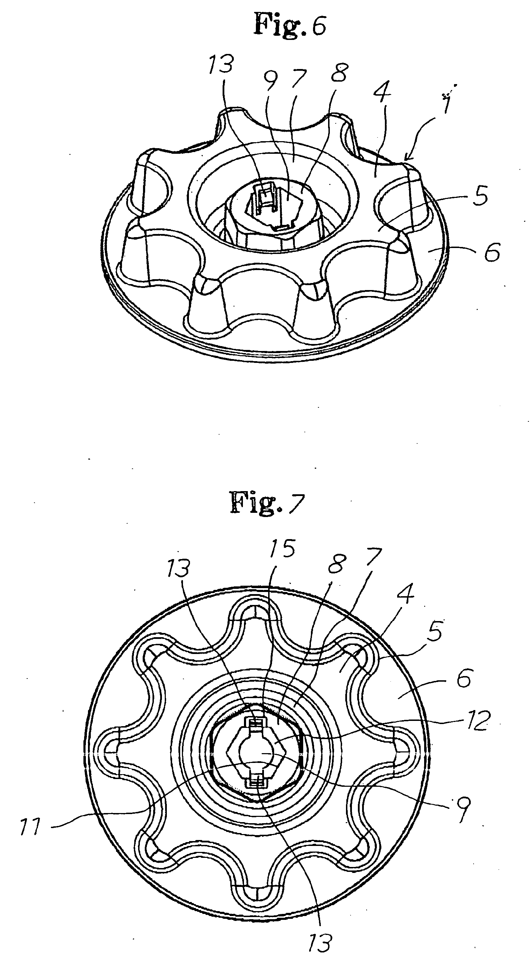

The resin-made head portion 1 has a grip portion 4 at its upper portion. This grip portion 4 has a plurality of projections and dents 5 on its outer peripheral face, and by means of gripping with the fingers the resin-made head portion 1 can be rotated by means of these projections and dents 5. Although this embodiment has eight projections and dents 5 on its outer peripheral face, the quantity and shape thereof may be determined arbitrarily. Further, as shown in FIGS. 6, 7, a disc-like flange portion 6, which makes contact with the hub 3 so as to press it, is formed integrally on the outside of the grip portion 4.

A circular central hole 7 is formed in the center of the top portion of this grip portion 4. A cylindrical portion 8 is provided so as to project inside this central hole 7. The bottom face of the central hole 7 communicates with the bottom face of the cylindrical portion 8. The height of the cylindrical portion 8 is slightly lower than the top face of the grip portion 4. According to this embodiment, the cylindrical portion 8 is formed into a hexagonal column so that the spare tire-fastening device can be rotated with a tool like a socket wrench engaged therewith. Thus, by means of gripping the grip portion 4 by hand, or by means of rotating the cylindrical portion 8 with a tool, the resin-made head portion 1 can be rotated. Moreover, an appropriate gap is provided between the inside face of the central hole 7 and the outer face of the cylindrical portion 8 so that a tool such as the socket wrench can be inserted therein.

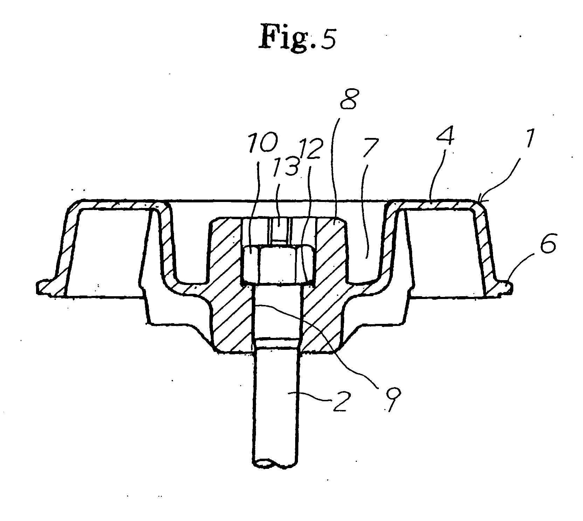

A bolt-insertion hole 9 is formed in the center of the cylindrical portion 8 so that the metal bolt 2 can be inserted therein from above. This bolt-insertion hole 9 goes vertically through the resin head portion 1, and its upper portion is formed into a non-circular portion 11 that corresponds to the hexagonal head 10 of the metal bolt 2. Thus, if, as shown in FIG. 5, the metal bolt 2 is inserted into the bolt-insertion hole 9 from above, and the head portion 10 is caused to settle on a step portion 12 on the bottom face of the non-circular portion 11 it becomes possible for the resin-made head portion 1 and the metal bolt 2 to be integrated with each other so that they are unable to rotate relatively, and, consequently, the metal bolt 2 can be rotated by means of the resin-made head portion 1.

Bolt fall-preventing pawls 13 are formed on the inner face of this non-circular portion 11. In this embodiment, the fall-preventing pawls 13 are formed at two positions that oppose each other. In contrast to the conventional products shown in FIGS. 1, 2, as the fall-preventing pawl 13 of the present invention, inwardly directed bent portions 14 are formed at an upper end that serves as a free end, and by engaging the top face of the head portion 10 of the inserted metal bolts 2 with the bottom face of the bent portion 14, the metal bolt 2 is prevented from falling down.

As shown in FIGS. 4, 6, and 7, these fall-preventing pawls 13 are formed by cutting away part of the inner peripheral portion of the cylindrical portion 8 from its top end, leaving behind the outer peripheral portion of the cylindrical portion 8. In other words, a slit 15 is formed on the back surface of the fall-preventing pawl 13, and cutouts communicating with the slit 15 are formed on both sides of the fall-preventing pawl 13. Therefore, the fall-preventing pawl 13 is connected to the cylindrical portion 8 only by means of its bottom portion, and when the metal bolt 2 is inserted, by virtue of its own elasticity the fall-preventing pawl 13 expands toward the slit 15 at the back and when the condition shown in FIG.4 is reached, the fall-preventing pawl 13 is restored inwardly so as to prevent the metal bolt 2 from falling down.

When a spare tire is fastened, a load is applied to the metal bolt 2 by means of a counter reaction from the spare tire so as to push up the resin-made head portion 1. This load is supported by the step portion 12 of the non-circular portion 11 and is not applied to the fall-preventing pawl 13. The fall-preventing pawl 13 is designed to prevent the metal bolt 2 from falling down when the spare tire-fastening device is turned upside down. A high intensity of a strength is accordingly not all that necessary, and there is no problem, even if the fall-preventing pawl 13 is formed thinly as described in this embodiment.

In the same way as in the case of conventional product, the spare tire-fastening device of the present invention that has a structure of this kind is used for fastening the tire by bolting it to the vehicle body through a hub hole in the spare tire. When by rotating the resin-made head portion 1 and the metal bolt 2 by use of a tool, the front end of the metal bolt 2 is bolted to a female screw in the vehicle body, the flange portion 6 of the grip portion 4 comes into contact with the hub 3 of the spare tire so that the spare tire is fastened between the vehicle body and the resin-made head portion 1 without any play. If the resin-made head portion 1 is rotated in a direction opposite to that of a fastening condition, the spare tire can be easily removed.

Because the metal bolt 2 is prevented by the fall-preventing pawl 13 from falling down from the resin-made head portion 1, the metal bolt 2 never falls down, even if the spare tire-fastening device is turned upside down in conditions of normal use. However, if, at a time of recycling, the fall-preventing pawl 13 is expanded outwardly by means of a front end of a tool, the metal bolt 2 can be easily separated from the resin-made head portion 1. Consequently, the metal portion and resin portion can be collected for recycling separately, and a superior degree of efficiency in recycling secured.

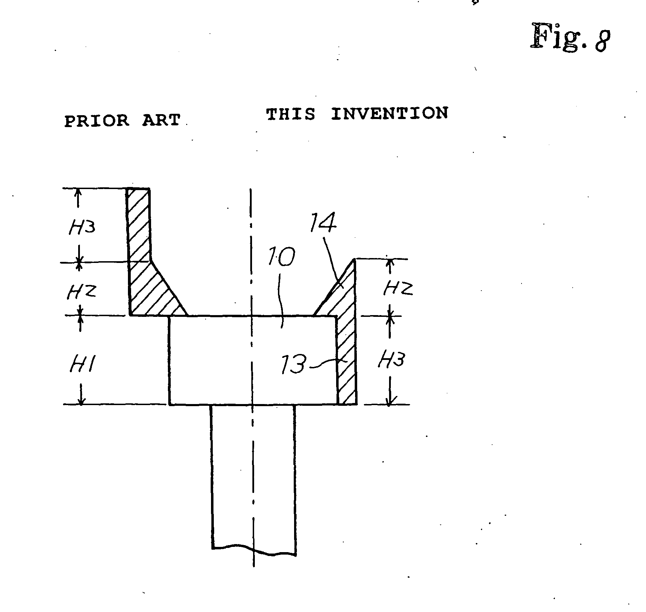

Further, because in the spare tire-fastening device of the present invention, the fall-preventing pawl 13 is formed on the inner face of the non-circular portion 11 of the bolt-insertion hole 9, the pawl root can be formed on the outer periphery of the bolt head portion 10. In other words, because, as shown in FIG. 8, the length H3 of the pawl root that is necessary for elastic deformation can be included in the height H1 of the bolt head portion, the height of the resin-made head portion 1 can be made lower than that of the conventional product, thereby resulting in reductions in size, and in the weight of components.

Further, if, as described in this embodiment, the fall-preventing pawl 13 is formed by cutting away part of the inner peripheral portion from its top end, leaving behind the outer peripheral portion of the cylindrical portion 8, the cylindrical portion 8 is formed into a continuous shape in a peripheral direction. In consequence, and in contrast to the conventional product that is not continuous in a peripheral direction the strength of the cylindrical portion 8 in the vicinity of the fall-preventing pawl is never inadequate and distortion and breaking can be prevented.

## Claims

1. A spare tire-fastening device comprising a large diameter resin-made head portion (1) for pressing a hub of a spare tire, and a metal bolt (2) inserted into the center of the resin-made head portion (1) and bolted to a vehicle body, wherein the resin-made head portion (1) includes a grip portion (4) that has a flange portion (6) which makes contact with the spare tire; a cylindrical portion (8) formed within a central hole (7) in the grip portion (4); a bolt-insertion hole (9) having a non-circular portion (11) which is formed in the center of the cylindrical portion (8) for receiving the head portion (10) of the metal bolt (2), the non-circular portion (11) having a step portion (12) providing a bottom face thereof which contacts the head portion (10) of the bolt to limit the downward movement of the bolt; and bolt fall-preventing pawls (13) formed at plural positions on an inner face of the non-circular portion (11) and projecting inwardly so as to catch the bolt; **characterized in that** a top portion of each of the bolt fall-preventing pawls (13) at the end thereof remote from said step portion (12) projects inwardly.

2. The spare tire-fastening device according to claim 1 wherein the grip portion (4) has projections and dents used for rotating the resin-made head portion (1) by hand, and the cylindrical portion (8) formed within the central hole (7) is formed into a rectangular column for rotating the resin-made head portion (1) by means of a tool inserted into the central hole.

3. The spare tire-fastening device according to claim 1 wherein the bolt fall-preventing pawl (13) is formed by cutting away part of the inner peripheral portion from a top end thereof, leaving behind an outer peripheral portion of the cylindrical portion (8).

## Patentansprüche

1. Ersatzreifenbefestigungsvorrichtung, umfassend einen aus Harz hergestellten Kopfteil (1) mit großem Durchmesser zum Drücken einer Nabe eines Ersatzreifens, und einen Metallbolzen (2), der in die Mitte des aus Harz hergestellten Kopfteils (1) eingebracht und mit einer Fahrzeugkarosserie verbolzt ist, worin der aus Harz hergestellte Kopfteil (1) einen Klemmteil (4), der einen Flanschteil (6) aufweist, der den Kontakt mit dem Ersatzreifen herstellt; einen in einem Mittelloch (7) im Klemmteil (4) ausgebildeten zylindrischen Teil (8); ein Bolzeneinbringloch (9) mit einem nichtkreisförmigen Teil (11), der in der Mitte des zylindrischen Teils (8) ausgebildet ist, um den Kopfteil (10) des Metallbolzens (2) aufzunehmen, wobei der nichtkreisförmige Teil (11) einen Stufenteil (12) aufweist, welcher eine Unterseite davon bereitstellt, die den Kopfteil (10) des Bolzens berührt, um die Abwärtsbewegung des Bolzens zu begrenzen; und Bolzenherausfallschutzklauen (13), die an mehreren Positionen auf einer Innenseite des nichtkreisförmigen Teils (11) ausgebildet sind und nach innen vorragen, um den Bolzen gegen ein Herausfallen aufzuhalten, umfasst; **dadurch gekennzeichnet, dass** ein oberer Teil der Bolzenherausfallschutzklauen (13) an deren vom Stufenteil (12) entfernten Ende jeweils nach innen vorragt.

2. Ersatzreifenbefestigungsvorrichtung nach Anspruch 1, worin der Klemmteil (4) Vorsprünge und Ausbuchtungen aufweist, die zum händischen Drehen des aus Harz hergestellten Kopfteils (1) verwendet werden, und der zylindrische Teil (8), der im Mittelloch (7) ausgebildet ist, zu einer rechteckigen Säule zum Drehen des aus Harz hergestellten Kopfteils (1) mittels eines in das Mittelloch eingebrachten Werkzeugs ausgebildet ist.

3. Ersatzreifenbefestigungsvorrichtung nach Anspruch 1, worin die Bolzenherausfallschutzklaue (13) durch Wegschneiden eines Teils des inneren Randteils von einem oberen Ende davon, wodurch ein äußerer Randteil des zylindrischen Teils (8) zurückbleibt, ausgebildet ist.

## Revendications

1. Dispositif de fixation de pneu de rechange comprenant une portion de tête réalisée en résine d'un grand diamètre (1) pour le pressage d'un moyeu d'un pneu de rechange, et un boulon métallique (2) inséré dans le centre de la portion de tête réalisée en résine (1) et boulonné à une caisse de véhicule, où la portion de tête réalisée en résine (1) comporte une portion de préhension (4) qui possède une portion de bride (6) qui vient en contact avec le pneu de rechange; une portion cylindrique (8) formée dans un trou central (7) dans la portion de préhension (4); un trou d'insertion de boulon (9) ayant une portion non circulaire (11) qui est formée dans le centre de la portion cylindrique (8) pour recevoir la portion de tête (10) du boulon métallique (2), la portion non-circulaire (11) ayant une portion de gradin (12) réalisant une face inférieure de celle-ci qui vient en contact avec la portion de tête (10) du boulon pour limiter le mouvement vers le bas du boulon; et des cliquets (13) empêchant une chute du boulon formés à plusieurs positions sur une face interne de la portion non-circulaire (11) et faisant saillie vers l'intérieur de manière à retenir le boulon; **caractérisé en ce qu'**une portion supérieure de chacun des cliquets (13) empêchant une chute du boulon à son extrémité éloignée de ladite portion de gradin (12) fait saillie vers l'intérieur.

2. Dispositif de fixation de pneu de rechange selon la revendication 1, dans lequel la portion de préhension (4) possède des saillies et des dents utilisées pour faire tourner la portion de tête réalisée en résine (1) à la main, et la portion cylindrique (8) formée dans le trou central (7) est réalisée en une colonne rectangulaire pour faire tourner la portion de tête en résine (1) au moyen d'un outil inséré dans le trou central.

3. Dispositif de fixation de pneu de rechange selon la revendication 1, dans lequel le cliquet (13) empêchant une chute du boulon est formé en découpant une partie de la portion périphérique intérieure d'une extrémité supérieure de celle-ci, en laissant subsister une portion périphérique extérieure de la portion cylindrique (8).
